(19) Europäisches Patentamt
European Patent Office
Office européen des brevets

(11) EP 1 281 734 A1

(12) # EUROPÄISCHE PATENTANMELDUNG

(43) Veröffentlichungstag:
**05.02.2003 Patentblatt 2003/06**

(51) Int Cl.[7]: **C09C 1/30**, C01B 33/193

(21) Anmeldenummer: **02012875.7**

(22) Anmeldetag: **11.06.2002**

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **04.08.2001 DE 10138491**

(71) Anmelder: **Degussa AG**
**40474 Düsseldorf (DE)**

(72) Erfinder:
- **Panz, Christian, Dr.**
**50389 Wesseling (DE)**
- **Meier, Karl**
**53347 Alfter (DE)**
- **Stoffels, Ralf**
**50374 Erfstadt (DE)**
- **Obladen, Helga**
**50321 Brühl (DE)**
- **Schmoll, Ralf, Dr.**
**53125 Bonn (DE)**

(54) **Verfahren zur Herstellung einer hydrophoben Füllungskieselsäure mit hohem Weissgrad und extrem niedriger Feuchtigkeitsaufnahme**

(57) Die Erfindung betrifft ein Verfahren zur Herstellung hydrophober Fällungskieselsäure, dadurch gekennzeichnet, dass

a) eine Mischung aus einem Organopolysiloxanderviat und einer Fällungskieselsäure hergestellt,
b) eine Konditionierung bei 10 bis 150 °C für eine Zeit von 0,5 bis 72 h vorgenommen und
c) eine oxidative Temperung unter fluiden Bedingungen bei über 300 °C mit einem oxidierenden Gas durchgeführt wird.

Die fluiden Bedingungen werden bevorzugt in einem Schwebebett, Fließbett, Wirbelbett, Fluidatbett und/oder Sprudelbett eingestellt.

EP 1 281 734 A1

## Beschreibung

Die Erfindung betrifft ein Verfahren zur Herstellung einer hydrophobe Fällungskieselsäure mit außergewöhnlich niedriger Wasseraufnahme, hohem Weißgrad und niedrig verdickenden Eigenschaften in Silikonkautschukformulierungen bei hoher Verstärkungswirkung in den Silikon-Vulkanisaten.

Die Behandlung feinverteilter Feststoffe, Metalloxide und Silikate mit siliciumorganischen Verbindungen, wie Organopolysiloxanen ist z. B. zum Beispiel aus DE 30 85 905 bekannt. Der hierin durchgeführte Temperungsprozeß wird unter Stickstoffinertisierung durchgeführt. Weiterhin sind hydrophobe Silikate zum Beispiel aus DE 24 35 860, DE 22 42 728 und DE 25 13 608 bekannt.

In diesen Schriften werden hydrophile Silikate und Fällungskieselsäuren hydrophobiert, indem eine Umsetzung der Silikate und Fällungskieselsäuren mit siliziumorganischen Verbindungen erfolgt. Als Hydrophobierungsmittel werden z.B. Organohalogensilane bzw. Organopolysiloxanverbindungen eingesetzt.

In DE 26 28 975 und DE 27 29 244 wird die Herstellung von hydrophoben Kieselsäuren beschrieben, in dem eine hydrophile Fällungskieselsäure mit geringer Wasseraufnahmefähigkeit mit Silikonöl bzw. Dimethyldichlorsilan umgesetzt wird. Im Verfahren gemäß DE 26 28 975 erfolgt die Umsetzung, indem das Hydrophobierungsmittel (Silikonöl) der trockenen Fällungskieselsäure zugesetzt wird, im Verfahren nach DE 27 29 244 wird das Hydrophobierungsmittel (Dimethyldichlorsilan) direkt in die Fällungskieselsäuresuspension gegeben. In beiden Fällen schließt sich nach dem Hydrophobierungsschritt eine Temperung bei erhöhten Temperaturen, das heißt zwischen 200 und 400 °C an.

Nachteilig bei diesem Verfahren ist, dass sich die auf diese Weise hydrophobierte Fällungskieselsäure bei den erforderlichen Prozeß-Temperaturen verfärbt. Die Verfärbung der Kieselsäure macht sich besonders störend bei der Zugabe zu Silikonformulierungen bemerkbar, d. h. bei der Zugabe dieser hydrophoben Fällungskieselsäuren zu Silikonkautschukformulierungen oder in silikonölbasierenden Entschäumermischungen.

Als Maß der Verfärbung kann der sogenannte Remissionswert dienen. Bei der Remissionsmessung wird das diffuse Reflexionsvermögen einer Probe untersucht. Je höher das diffuse Reflexionsvermögen einer Probe, desto höher ist ihr Remissionswert und damit der Weißgrad der Probe.

Fällungskieselsäuren haben in der Regel einen Remissionswert von maximal 97 %. Eine Aufgabe der vorliegenden Erfindung ist es daher, eine Hydrophobierung von Kieselsäuren so durchzuführen, dass der Remissionswert der ursprünglichen Kieselsäure im Idealfall erhalten bleibt.

Verfärbungen treten insbesondere dann auf, wenn die Fällungskieselsäuren stark hydrophobiert werden, das heißt eine hohe Methanolbenetzbarkeit und hohe Kohlenstoffbeladungen aufweisen. Gerade diese Eigenschaften sind aber häufig (z. B. in Silikonkautschukformulierungen) erwünscht.

Ein weiterer Nachteil der bekannten Verfahren ist, dass hier nur eine begrenzte Menge an Hydrophobierungsmittel kovalent auf der Kieselsäure angebunden werden kann. Gerade in Silikonkautschukformulierungen sind jedoch hohe Kohlenstoffbeladungen erwünscht, da sich hierdurch die rheologischen Eigenschaften, wie die Verdickung, d. h. niedrige Fließgrenze und niedrige Viskosität, der Compounds entscheidend verbessern lassen.

Als Maß der Verdickung kann die sogenannte DBP-Zahl dienen. Die DBP-Zahl gibt die Aufnahmekapazität einer Kieselsäure an DBP an. Das Meßverfahren zeigt, bei wieviel g an Dibuthylphthalat auf 100 g Probe ein sprunghafter Kraftanstieg im Kneter zu beobachten ist.

Hohe Kohlenstoffbeladungen können auch nicht durch Verwendung von Diorganodichlorsilanen, oder Hydrolyseprodukte von Diorganodichlorsilanen oder mit entsprechenden Diorganopolysiloxanen im Überschuß zu den vorhandenen Silanolgruppen erreicht werden, da nicht mehr die gesamte Menge der siliziumorganischen Verbindungen kovalent an die Kieselsäure gebunden wird. Bei hydrophobierten Kieselsäuren mit Anteilen an nicht kovalent gebundenem Hydrophobierungsagenz besteht die Gefahr, dass diese Moleküle eine merkliche Mobilität aufweisen können, was in vielen Anwendungen sehr stören kann (z.B. in Silikonkautschukanwendungen für medizinische Zwecke oder für lebensmittelechte Gebrauchsgegenstände wie Babysauger etc.)

Nachteilig ist bei den Verfahren gemäß dem Stand der Technik weiterhin, dass die relativ niedrigen Kohlenstoffgehalte von unter 3,1 % zu hydrophoben Kieselsäuren führen, die in Silikonkautschukformulierungen stark verdickend wirken. In DE 26 28 975 werden Daten zur Prüfung der hydrophoben Fällungskieselsäure in Silikonkautschukformulierungen aufgeführt, in denen die hydrophobe Fällungskieselsäure in steigenden Gewichtsanteilen in Silikonkautschukformulierungen eingesetzt wird. Dabei wird ersichtlich, dass schon bei einem Gehalt von 15 % der hydrophoben Kieselsäure im Kautschuk die selbstverlaufenden Eigenschaften der Kieselsäure verschwinden, und dass bei 20 % keine fließfähigen Compounds mehr erhalten werden. In allen Tabellen kann man deutlich sehen, dass sich alle mechanischen Eigenschaften mit zunehmenden Füllstoffgehalt verbessern. Es wäre daher wünschenswert, Silikonkautschukformulierungen herzustellen, die zur Verbesserung der mechanischen Eigenschaften hohe Anteile an hydrophoben Kieselsäuren aufweisen, aber gleichzeitig noch Fließfähig sind.

Aufgabe der vorliegenden Erfindung war es daher, ein Verfahren zur Herstellung einer hydrophoben Fällungskieselsäure bereitzustellen, die eine hohe, kovalent angebundene Kohlenstoffbeladung, eine niedrige Wasseraufnahme, eine niedrigverdickende Wirkung mit guten Verstärkereigenschaften in Silikonkautschukformulierungen und einen

hohen Weißgrad aufweist. Das Verfahren sollte großtechnisch anwendbar sein, d.h. reproduzierbare Hydrophobierungen mit hohem Weißgrad liefern und sowohl kontinuierlich als auch diskontinuierlich durchführbar sein.

Überraschenderweise wurde gefunden, dass eine hydrophobe Kieselsäure mit den geforderten Eigenschaften durch Verteilen eines Polysiloxans auf einer hydrophilen Kieselsäure mit anschließender Konditionierung und einer oxidativer Temperung, z.B. im Wirbelbettreaktor, erhalten werden kann.

Gegenstand der vorliegenden Erfindung ist ein Verfahren zur Herstellung von hydrophoben Fällungskieselsäuren, gekennzeichnet durch die folgenden Schritte:

a) Herstellung einer Mischung aus einem Organopolysiloxanderviat und einer Fällungskieselsäure,
b) Durchführung einer Konditionierung bei 10 bis 150 °C für eine Zeit von 0,5 bis 72 h und
c) Durchführung einer oxidativen Temperung unter fluiden Bedingungen bei über 300 °C mit einem oxidierenden Gas.

Die Konditionierung wird bevorzugt durch eine Wärmebehandlung von 0,5 bis 2 h bei 100 bis 150 °C bzw. 15 bis 30 h bei 50 bis 80 °C durchgeführt. Es ist ebenfalls möglich, eine Lagerung bei Raumtemperatur (d.h. ca. 20 °C) von mindestens 48 h durchzuführen.

Die erfindungsgemäß hergestellte hydrophobe Fällungskieselsäure zeichnet sich durch die folgenden Eigenschaften aus:

- Kohlenstoffgehalt > 3.1 %
- Methanolbenetzbarkeit > 60 %
- Remissionswert > 94 %
- Verhältnis von BET/CTAB > 1 und < 3
- DBP-Aufnahme < 230 g/100 g
- BET-Oberfläche 50 -110 $m^2/g$
- CTAB-Oberfäche > 30 $m^2/g$
- Wasserdampfaufnahme bei 30 °C und 30 RF∗ 1,1 ± 0,2 %
- Wasserdampfaufnahme bei 30 °C und 70 RF∗ 1,4 ± 0,3 %

Die genannten Vorzugsbereiche können unabhängig voneinander eingestellt werden. Weiterhin können die hydrophoben Kieselsäuren gemäß der Erfindung jeweils unabhängig voneinander durch die folgenden Eigenschaften gekennzeichnet sein

- Searszahl < 1,6
- pH-Wert 5-9
- Wassergehalt < 2 %
- Leitfähigkeit < 150 µS
- Glühverlust > 3 %

Die Leitfähigkeit kann unter 100, 60, 30 oder sogar unter 20 µS liegen.

Das Verfahren liefert eine Kieselsäure, die

- einen außergewöhnlich hohen Weißgrad (Remission über 94 %) aufweist
- auch bei Temperaturen über 300 °C an der Luft keine Verfärbung zeigt
- eine außergewöhnlich niedrige Feuchtigkeitsaufnahme besitzt, diese liegt auf dem Niveau von pyrogenen Kieselsäuren
- eine sehr homogene Hydrophobierung, das heißt eine steile Methanolbenetzbarkeitskurve aufweist
- eine hohe Methanolbenetzbarkeit (> 60 %) besitzt
- einen hohen Gehalt an fest gebundenem Kohlenstoff ( > 3,1 %) hat
- eine niedrige Verdickungswirkung im Silikonkautschuk zeigt
- kaum ionischen Verunreinigungen, d. h. niedrige Leitfähigkeit < 150 µS enthält
- keine Tenside, Emulgatoren oder organische Lösungsmittel, die zur Verfärbung bei erhöhten Temperaturen führen können, enthält.

Das Verfahren zur Herstellung der erfindungsgemäßen Kieselsäure ermöglicht es, ohne den Einsatz von Lösungsmitteln (außer Wasser), Emulgatoren, Tensiden oder anderer oberflächenaktiven Molekülteile im Hydropho-

(∗RF = Raumfeuchte).

bierungsmittel auszukommen und trotzdem eine homogene Verteilung des Hydrophobierungsmittel zu erhalten, so dass diese Kieselsäure niedrigverdickende Eigenschaften mit Verfärbungsfreiheit verbindet.

Die gute Verteilung des Hydrophobierungsmittels und der hohe Grad der Hydrophobierung der erfindungsgemäßen Fällungskieselsäure bewirken z. B. in Silikonkautschukformulierungen eine sehr niedrige Verdickung -die sich auch durch längere Lagerung nicht verschlechtert- bei gleichzeitig guten mechanischen und optischen Eigenschaften der Vulkanisate.

Erfindungsgemäße Kieselsäuren zeigen eine steile Methanolbenetzbarkeit, d. h. sie sind homogen hydrophobiert (Fig. 1). Fig. 2 zeigt eine Methanolbenetzbarkeit von üblichen hydrophoben Kieselsäuren, die ohne die erfindungsgemäße Konditionierung getempert wurden.

Die erfindungsgemäße Kieselsäure wird vorzugsweise mit einem Polysiloxan hergestellt, so dass sie nach der Temperung als organische Reste ausschließlich Methylgruppen enthält, was mit einer sehr hohen thermischen Belastbarkeit (> 300 °C unter Luftzutritt führen nicht zu Verfärbungen) einhergeht.

Das erfindungsgemäße Verfahren ermöglicht es, besonders Kieselsäuren mit niedriger Silanolgruppendichte (als Maß der Silanolgruppenmenge dient die Searszahl, d. h. der Alkaliverbrauch einer Säure-Base-Titration. Zusammengenommen mit der BET-Oberfläche können dann relativ Silanolgruppendichten verglichen werden) zu hydrophobieren und in der resultierenden erfindungsgemäßen Kieselsäure einen hohem Weißgrad (>94% Remission) zu erzielen.

Die für eine Fällungskieselsäure sehr niedrige Wasseraufnahme der erfindungsgemäßen, hydrophoben Fällungskieselsäure wird durch die Auswahl einer hydrophilen Fällungskieselsäure sehr niedriger Silanolgruppendichte und durch eine sehr homogene Hydrophobierung mit siliziumorganischen Verbindungen ermöglicht. Als ein Maß für die Silanolgruppendichte dient die Searszahl im Verhältnis zur BET-Oberfläche.

Die im erfindungsgemäßen Verfahren angewendeten Reaktionsbedingungen führen nicht zu einer Verkohlung und damit kaum zu einer Verfärbung. Es ist daher wichtig, dass die hydrophile Basiskieselsäure keine organischen Verunreinigungen aufweist, da sonst die Verfärbung zunimmt. Da die durch die Temperung entstehenden, unter Prozeßbedingungen gasförmigen Spaltprodukte auch in oxidierender Atmosphäre eine gewisse Verfärbung bewirken können, ist es wichtig, dass diese Spaltprodukte durch einen ausreichenden Gasdurchsatz von dem Produkt entfernt werden.

Die Verwendung von flüssigen Polysiloxan, bevorzugt Polydimethylsiloxan von vorzugsweise 30-100 cSt erlaubt eine optimale Verteilung auf der Basiskieselsäure. Unter den oxidativen Reaktionsbedingungen können die verwendeten Polydimethylsiloxane verharzen. Dies hat den großen Vorteil, dass sich das Hydrophobierungsmittel in flüssiger Form auf der Kieselsäure verteilen und dann fixieren läßt. Durch das oxidierende Tempern läßt sich die Menge an gebundenem Kohlenstoff stark erhöhen.

Hohe Kohlenstoffbeladungen und hohe Methanolbenetzbarkeiten verbessern die Eigenschaften von Kieselsäuren in Silikonkautschukformulierungen entscheidend. Die weitere Verminderung der Feuchteaufnahmefähigkeit ermöglicht drucklose Vulkanisationen bei Temperaturen über 100 °C in Silikonkautschukformulierungen, da keine störenden Dampfblasen im Vulkanisat auftreten. Die stark kohlenstoffhaltigen Kieselsäuren zeigen in Silikonkautschukformulierungen wesentlich verbesserte rheologische Eigenschaften, d. h. sie wirken nur gering verdickend und weisen niedrige Fließgrenzen auf. Diese geringe Verdickungswirkung ermöglicht es, fließfähige Silikonkautschukformulierungen herzustellen, die mit weit über 20 % hydrophober Fällungskieselsäure gefüllt sind und trotzdem im Spritzgußverfahren verarbeitet werden können. Zusätzlich führt der höhere Füllgrad zu deutlich verbesserten mechanischen Eigenschaften der Vulkanisate.

Die erfindungsgemäß hergestellte hydrophobe Fällungskieselsäure kann daher in folgenden Anwendungen eingesetzt werden:

1. Als Füllstoff in Silikonkautschukformulierungen

Die erfindungsgemäße Kieselsäure kann ohne weitere Hydrophobierung in allen Siliconkautschukarten eingesetzt werden. Die niedrige Wasseraufnahme unterdrückt Dampfentwicklung in hochtemperaturvernetzenden Systemen wie LSR- und HTV-Siliconkautschuk und ermöglicht porenfreie Vulkanisate. Die niedrige DBP-Zahl führt zu niedrigen Compoundviskositäten, was sich vorteilhaft in LSR- und RTV2-Compounds nutzen läßt. Die Compounds weisen eine hohe Lagerstabilität auf, das sogenannte Nachverstrammen wird unterdrückt. Durch die niedrige Feuchtigkeitsaufnahme kann die erfindungsgemäße Kieselsäure auch in luftfeuchtigkeitshärtenden Systemen wie RTV1-Compounds eingesetzt werden. Die Compounds weisen ebenfalls eine hohe Lagerstabilität auf. Da der Feuchtigkeitsgehalt der erfindungsgemäßen Kieselsäure deutlich herabgesetzt ist, wird das unerwünschte Aushärten während der Lagerung unterdrückt.

Aufgrund des hohen Weißgrades der Kieselsäure lassen sich schöne weiße Vulkanisate erzeugen. Die niedrige Wasseraufnahme der Kieselsäure führt zu einer niedrigen Feuchtigkeitsaufnahme der Vulkanisate. Dies bedingt einen hohen elektrischen Widerstand und eine Erhöhung der Alterungsstabilität, speziell bei hohen Temperaturen.

Diese Eigenschaften sind besonders in elektrischen Isolatoren und in Dichtungen nützlich.

2. Als Entschäumerkomponente

Es ist z. B. aus DE 28 29 906, DE 28 29 906, US 4 377 493, DE 34 11 759, US 4 344 858 und WO 95/05880 bekannt, dass hydrophobierte Kieselsäuren in Entschäumerformulierungen eingesetzt werden können. Hier ist die hohe Hydrophobie und eine -auch für größere Moleküle- gut zugängliche große Oberfläche der erfin lungsgemäßen Kieselsäure für eine hohe Entschäumerleistung vorteilhaft. Die hohe Hydrophobie der erfindungsgemäß hergestellten Kieselsäure sorgt darüber hinaus für eine hohe Alkalibeständigkeit und führt besonders in stark alkalischen Medien zu deutlich höheren Standzeiten.

Die hohen Remissionswerte der Kieselsäuren sorgen für ansprechende, verfärbungsfreie Entschäumerformulierungen, besonders in Formulierungen auf der Basis von Mineral- und Silikonöl.

3. Als Free-Flow Mittel

Es ist bekannt, (z. B. Schriftenreihe Degussa AG, Fällungskieselsäuren und Silikate, 1984) dass hydrophobierte Kieselsäuren als Free-Flow-Hilfsmittel verwendet werden können. Aufgrund der niedrigen Wasseraufnahme ist die erfindungsgemäße Kieselsäure besonders gut als Free-Flow-Hilfsmittel für hydrolyseempfindliche Stoffe geeignet. Die hohen Remissionswerte der erfindungsgemäß hergestellten Kieselsäuren stellen auch hier einen zusätzlichen Vorteil dar. Weiterhin kann die erfindungsgemäße Kieselsäure als Trägersubstanz, insbesondere für Insektizide, als Insektizid als solches, als Antiblocking-Hilfsmittel oder als Füllstoff in luftfeuchtigkeitshärtenden Silikonkautschukmischungen verwendet werden.

Die Herstellung der hydrophoben Fällungskieselsäuren erfolgt in 3 Schritten:

- Zunächst erfolgt die physikalische Vorverteilung eines flüssigen Polysiloxanderivates auf der Kieselsäureoberfläche. Wird die Vorverteilung in wässrigen Medien, d. h. Suspensionen oder Kieselsäure mit einem Wassergehalt über 70 % durchgeführt, dann ist diese typischerweise nicht beständig. Es muß daher nach der Vorverteilung schnell abfiltriert und/oder eine Kurzzeittrocknung (z. B. Spin-Flash, Düsenturm-Trockner) durchgeführt werden. Dies führt zu einer Konservierung der Verteilung der Organopolysiloxantröpfchen auf der Kieselsäure und verhindert die Entmischung in Wasser, Silikonöl und Kieselsäure.

- Anschließend wird durch einen gezielten Konditionierungschritt Verfahrensschritt b) die Verteilung des Hydrophobierungsmittels weiter verbessert und ein Aufziehen des Polysiloxanderivates auf der Kieselsäureoberfläche erzielt. Die Verteilung ist auch in wässrigen Medien stabil. Das Polysiloxanderviat trennt sich nach dem Verfahrensschritt b) nicht mehr von der Kieselsäure ab. Die so konditionierten Kieselsäuren lassen sich bei Kohlenstoffgehalten ≥ 3,1 stufenlos auf eine Methanolbenetzbarkeit bis zu 55 % einstellen. Das BET/CTAB-Verhältnis ist nach diesem Verfahrensschritt < 1. Die Anbindung des Polysiloxans an die Kieselsäure erfolgt vermutlich durch die Ausbildung multibler Wasserstoffbrückenbindungen zwischen den Siloxanbrücken der Polysiloxanmoleküle und den Silanolgruppen der Kieselsäureoberfläche.

- Anschließend erfolgt eine Temperung in oxidierender Atmosphäre, welche Verfärbungserscheinungen unterdrückt, für eine kovalente Anbindung des Hydrophobierungsagens sorgt - und vermutlich durch das Entstehen gasförmiger Spaltprodukte - die Verteilung des Hydrophobierungsmittels noch weiter steigert. Getemperte Kieselsäuren haben - bei niedrigerem Kohlenstoffgehalt als die entsprechende, konditionierte Kieselsäure - eine höhere Methanolbenetzbarkeit. Die Temperung in oxidierender Atmosphäre unterstützt die Verharzung der Polysiloxane, so dass sich deutlich größere Mengen an Hydrophobierungsmittel kovalent auf der Kieselsäure verankern lassen. Das BET/CTAB-Verhältnis hat sich umgekehrt und ist jetzt > 1.

Als Organopolysiloxanderivat können alle Organosilane oder Organohalogensilane eingesetzt werden, die üblicherweise zur Hydrophobierung von Fällungskieselsäuren verwendet werden.

Verfahrensschritt a) des erfindungsgemäßen Verfahrens kann mit den folgenden Varianten durchgeführt werden:

- Zugabe von Organopolysiloxanderivat auf eine Fällungskieselsäure mit einem Wassergehalt von 1 bis 80 Gew.-%, bevorzugt 20 bis 60 Gew.-%.
- Zugabe des Organopolysiloxanderivats in eine Dispersion der Fällungskieselsäure, d. h. nach erfolgter Fällung von Silikat mit einer Säure z. B. mit einem Rhein-Hütte-Mischer oder Kothof-Mischsirene oder Ultra-Turrax. Dies erfordert eine rasche Filtration bzw. eine Kurzzeit-Trocknung nach der Umsetzung.

- Zugabe des Organopolysiloxanderivats zu einer Fällungskieselsäure mit einem Wassergehalt von 70 bis 99 Gew.-% bei anschließender Trennung des Feststoffs vom Wasser. Die Trennung kann durch Filtration, Düsenturm, Spin-Flash oder eine sonstige Kurzzeit-Trocknung erfolgen. Je höher der Wassergehalt, desto rascher sollte die Trennung durchgeführt werden. Eine Entmischung ist zu vermeiden.
- Gleichzeitiges Zuführen der Fällungskiesel- bzw. wasserhaltigen Kieselsäure und des Organopolysiloxanderivats in einen Spin-Flash-Trockner.
- Mischen von trockener Fällungskieselsäure mit Polysiloxan, z. B. in einem Gericke-Mischer.

Alternativ kann zunächst ein Masterbatch, d.h. eine konditionierte Fällungskieselsäure, erhalten nach den Verfahrensschritten a) und b) hergestellt und mit einer (hydrophilen) bzw. wasserhaltigen Fällungskieselsäure z. B. Filterkuchen, Kieselsäuresuspensionen bzw. Kieselsäuredispersionen gemischt werden.

Der Wassergehalt der hydrophilen Fällungskieselsäure kann in den bereits genannten Bereichen schwanken.

Die Basis-Kieselsäure kann z. B. im Massenverhältnis 1:1 bis 1:3 mit Silikonöl z. B. DOW CORNING (R) 200 FLUID 50 CS (Dimethylpolysiloxan 50 mPas, mit Trimethysilyl-Gruppen terminiert, Kohlenstoffgehalt ca. 33 %) belegt werden (Schritt a)). Das so entstandene Pulver wird z. B. über eine halbe Stunde bei einer Temperatur von über 100 °C konditioniert. Die Konditionierung (Schritt b) wird hier so lange durchgeführt, bis ein Material entstanden ist, das zwar wasserbenetzbar (Methanolbenetzbarkeit < 20, zur Definition der Methanolbenetzbarkeit siehe Meßverfahren) ist, bei dem sich jedoch Kieselsäure und Silikonöl beim Eintrag in Wasser nicht mehr voneinander trennen (wenn sich nach Schritt b) unmittelbar Schritt c) anschließt, dann wird eine Methanolbenetzbarkeit > 20 bevorzugt). Durch Mischen dieses Masterbatches (z. B. 50 Gew.-% Kieselsäure und 50 Gew.-% Silikonöl) mit wässrigen Kieselsäuredispersionen oder Kieselsäuresuspensionen entstehen stabile Mischungen, bei denen sich das Silikonöl nicht mehr von der Kieselsäure abtrennt Die Gesamtmischung enthält typischerweise 1 Gewichtsteil Silikonöl, ca. 4-8 Gewichtsteile Kieselsäure und 20-60 Gewichtsteile Wasser. Zur Herstellung einer solchen Suspension kann z. B. der Masterbatch (z. B. 50 % Kieselsäure und 50 % Silikonöl) mit ca. der 10-16-fachen Menge an Filterkuchen (Feststoffgehalt ca. 20 %) und ca. der 10-20-fachen Menge an zusätzlichem Wasser intensiv gemischt werden. Der Vorteil dieser Vorgehensweise besteht darin, dass sich der wasserbenetzbare Masterbatch (der bis zu 75 % an hydrophoben Organopolysiloxan enthält!) direkt in Kieselsäurefällsuspensionen oder Kieselsäurespeisen sehr fein und stabil verteilen läßt, ohne daß der Einsatz von Emulgatoren oder Tensiden erforderlich ist. Nach Trocknung oder Filtration und anschließender Trocknung einer solchen Mischung kann die so erhaltene organopolysiloxanhaltige Kieselsäure erneut konditioniert werden (Schritt b).

Diese Schritte können einzeln, ggf. mit einer vorhergehenden Vermahlung durchgeführt werden. Die Vermahlung sollte jedoch nicht vor der Belegung a) durchgeführt werden. Es ist auch möglich, mehrere, d. h. gleiche oder unterschiedliche dieser Varianten nacheinander durchzuführen. Es sind folgende Ausführungsformen des erfindungsgemäßen Verfahrens denkbar:

- Einer der Verfahrensschritte a), b) und c) wird mehrmals (2 bis 5 mal) hintereinander ausgeführt.
- Die Verfahrensschritte a) und b) werden mehrmals (2 bis 5 mal) hintereinander durchgeführt.
- Alle Verfahrensschritte a) b) und c) werden mehrmals (2 bis 5 mal) hintereinander durchgeführt, d. h. der Prozess wird mehrmals durchlaufen.

Verfahrensschritt b) wird bevorzugt durch eine Wärmebehandlung von 100 - 150 °C innerhalb von 0,5 bis 2 Stunden durchgeführt. Nach der Konditionierung kann eine teilhydrophobierte Kieselsäure mit einer Methanolbenetzbarkeit von 20 % und mehr vorliegen. Grundsätzlich kann zwischen Naß- und Trockenhydrophobierung unterschieden werden.

Naßhydrophobierung bedeutet dass es sich bei den silikatischen Edukten um wässrige Kieselsäuresuspensionen, Kieselsäurespeisen oder stark wasserhaltige Kieselsäurefilterkuchen handelt, die mit den entsprechenden Hydrophobierungsmitteln belegt werden, wie es z. B. in DE 27 29 244 für Fällungssuspensionen mit Organohalogensilanen beschrieben wird.

Trockenhydrophobierung bedeutet, dass es sich bei den silikatischen Edukten um Kieselsäurepulver mit verschiedenen Feuchtigkeitsgehalten von 1 bis 75 % handelt, die mit den entsprechenden Hydrophobierungsmitteln belegt werden. Dieses Verfahren wird z. B. in DE 26 28 975 beschrieben.

Für die Herstellung der erfindungsgemäßen Kieselsäure werden Organopolysiloxanderivate eingesetzt; es können jedoch auch andere Siliziumverbindungen verwendet werden, die unter den gewählten Reaktionsbedingungen zu Organopolysiloxanen reagieren (z. B. Dichlordimethylsilan in wässriger Umgebung).

Als Hydrophobierungsreagenzien dienen Organopolysiloxanderivate oder deren Vorstufen, z. B. der Zusammensetzung $R_{4-n}SiX_n$ (mit n = 1, 2, 3), $[SiR_xX_yO]_z$ (mit $0 \le x \le 2$, $0 \le \le 2$, $3 \le z \le 10$ mit x + y = 2), $[SiR_xX_yN]_z$ (mit $0 \le x \le 2$, $0 \le y \le 2$, $3 \le z \le 10$ mit x + y = 2), $SiR_nX_mOSiR_oX_p$ (mit $0 \le n \le 3$, $0 \le m \le 3$, $0 \le o \le 3$, $0 \le p \le 3$, mit n + m = 3, o + p = 3), $SiR_nX_mNSiR_oX_p$ (mit $0 \le n \le 3$, $0 \le m \le 3$, $0 \le o \le 3$, $0 \le p \le 3$, mit n + m = 3, o + p = 3 ), $SiR_nX_m[SiR_xX_yO]_zSiR_oX_p$ (mit $0 \le n \le 3$, $0 \le x \le 2$, $0 \le y \le 2$, $0 \le o \le 3$, $0 \le p \le 3$, $1 \le z \le 10000$ mit n + m = 3, x + y = 2, o + p = 3 ) verwenden.

Bei diesen Verbindungen kann es sich um lineare, cyclische und verzweigte Silan-, Silazan und Siloxanverbindungen handeln. Bei R kann es sich um Alkyl und/oder Arylreste handeln, welche mit funktionellen Gruppen wie der Hydroxygruppe, der Aminogruppe, Polyethern wie Ethylenoxid und/oder Propylenoxid und Halogenidgruppen wie Fluorid substituiert sein können. R kann auch Gruppen wie Hydroxy-, Amino-, Halogenid-, Alkoxy- Alkenyl-, Alkinyl- und Aryl-Gruppen und schwefelhaltige Gruppen enthalten. Bei X kann es sich um reaktive Gruppen wie Silanol-, Amino-, Mercapto, Halogenid-, Alkoxy- Alkenyl-und Hydridgruppen handeln.

Bevorzugt werden lineare Polysiloxane der Zusammensetzung $SiR_nX_m[SiR_xX_yO]_zSiR_oX_p$ (mit $0 \leq n \leq 3$, $0 \leq m \leq 3$, $0 \leq x \leq 2$, $0 \leq y \leq 2$, $0 \leq o \leq 3$, $0 \leq p \leq 3$, $1 \leq z \leq 10000$ mit $n + m = 3$, $x + y = 2$, $o + p = 3$ ) verwendet, bei welchen R bevorzugt durch Methyl repräsentiert wird.

Besonders bevorzugt werden Polysiloxane der Zusammensetzung $SiR_nX_m[SiR_xX_yO]_zSiR_oX_p$ (mit $0 \leq n \leq 3$, $0 \leq m \leq 1$, $0 \leq x \leq 2$, $0 \leq y \leq 0{,}2$, $0 \leq o \leq 3$, $0 \leq p \leq 1$, $1 \leq z \leq 1000$ mit $n + m = 3$, $x + y = 2$, $o + p = 3$ ) verwendet, bei welchen R bevorzugt durch Methyl repräsentiert wird. Aufgrund des gewählten, erfindungsgemäßen Verfahrens lassen sich aber speziell auch schwerflüchtige Polysiloxane einsetzten, die keine funktionellen Gruppen aufweisen.

Durch das Vorhandensein bestimmter funktioneller Gruppen in Polysiloxanderivaten können Salze oder niedermolekulare Stoffe wie $NH_3$, Amine, Alkohole etc. entstehen, welche zu störenden Verunreinigungen führen können. Eine wichtige Ausnahme stellen hier silanolfunktionalisierte Polysiloxane dar, da hier als Verunreinigung lediglich Wasser entsteht, das unter den gewählten Prozeßbedingungen leicht entfernbar ist.

Bevorzugt kann es sich bei dem Hydrophobierungsmittel um ein methylterminiertes Polydimethylsiloxan, insbesondere eines mit einer Viskosität von 30 - 100 mPas, bevorzugt 40 - 60 mPas handeln. Ein geeignetes Polysiloxanöl ist z. B. DOW CORNING (R) 200 FLUID 50 CS.

Da es sich bei den genannten Hydrophobierungsmitteln um schwerflüchtige Verbindungen handelt, spielen für die Vorverteilung der Hydrophobierungsmittel auf der Kieselsäureoberfläche Kapillarkräfte und Diffusionsvorgänge an der Flüssig/Fest-Phasengrenze eine wichtige Rolle.

Selbst wenn die bevorzugt eingesetzten Hydrophobierungsmittel im Verlauf einer thermischen Behandlung eine gewisse Flüchtigkeit aufweisen, ist die Flüssig/Fest-Verteilung trotzdem von Bedeutung. Aus diesem Grund wird hier zwischen physikalischer Vorverteilung, Konditionierung und Temperung unterschieden.

Die Temperung, d. h. Verfahrensschritt c) wird bei mindestens 300, bevorzugt über 350, ganz besonders bevorzugt über 360 - 370 °C mit einem oxidierenden Gas durchgeführt. Dies kann Luft, $Cl_2$, $NO_x$ ($NO_2$, $N_2O_5$, NO, $N_2O$), $O_3$, $O_2$, $Br_2$, $F_2$ oder ein Gemisch dieser Gase mit weiteren inerten Gasen wie $CO_2$, $N_2$ oder Brennerabgase jeweils bevorzugt nicht weniger als 1 Vol-%, sein.

Das oxidierende Gas kann optional weiterhin bis zu 80, bevorzugt bis zu 50 Vol-%, besonders bevorzugt 20-40 Vol-% Wasser enthalten.

Es ist in jedem Fall für einen guten Durchsatz an Gas zu sorgen; das Gas muß nach Möglichkeit jedes Kieselsäureteilchen erreichen. Dies wird durch die fluiden Bedingungen im erfindungsgemäßen Verfahren erreicht.

Fluide Bedingungen wie z.B. Wirbelschichten oder Fließbett gemäß der Definition im Römpp Lexikon Chemie 2. Auflage, 1999 können z. B. in einem Schwebebett, Fließbett, Wirbelbett, Fluidatbett und/oder Sprudelbett eingestellt werden.

Es ist möglich, mehrere dieser Reaktionstypen untereinander zu kombinieren. Das Verfahren kann batchweise oder kontinuierlich betrieben werden.

Exemplarisch werden im Folgenden die Bedingungen im Wirbelschichtreaktor näher beschrieben.

<u>Temperung im Wirbelbett:</u>

Die Temperung der polysiloxanbehandelten Kieselsäure unter oxidierenden, d.h. bleichenden Reaktionsbedingungen kann im Wirbelbett unter Anwesenheit von Sauerstoff durchgeführt werden. Da gefällte Kieselsäurepulver (auch polysiloxanbehandelte Kieselsäuren) typischerweise leicht rieselfähig und fluidisierbar sind, lassen sie sich leicht im Wirbelbett tempern. Die entscheidenden Vorteile des Wirbelbettreaktors liegen in der homogenen Stoff-und Temperaturverteilung des Wirbelbettreaktors. Selbst bei einer überwiegenden Wandbeheizung und Temperaturen über 300 °C differieren Wand- und Produkttemperatur nur um wenige Grad (typischerweise nur 2 - 4 °C) da ein aktives Wirbelbett (d.h. ein Wirbelbett, das überhalb seines Fluidisationspunktes betrieben wird) eine optimale Wärmeleitfähigkeit ausweist.

Mit konventionellen wandbeheizten Reaktortypen -oder mit Reaktortypen bei welchen die Heizstäbe direkten Produktkontakt haben- ist diese homogene Temperaturverteilung bei einem thermisch isolierenden Produkt wie Kieselsäure nur schwer realisierbar. Speziell bei Reaktortypen mit Heizstäben - oder bei dem Versuch die Aufheizdauer der Kieselsäure von Raumtemperatur auf über 300 °C in weniger als 0,5 h zu bewerkstelligen kann - es zu starken lokalen Überhitzungen kommen. Dann wirkt das oxidierende Gas, z.B. Sauerstoff nicht mehr bleichend, sondern verkohlend und damit verfärbend. In konventionellen Reaktoren befindet sich normalerweise ein Rührwerk, um eine homogenere Stoff-und Temperaturverteilung zu erreichen. Da Kieselsäure abrasive Eigenschaften besitzt, kann hier Metallabrieb auftreten, der zu Verfärbungserscheinungen auf der Kieselsäure führt.

In Wirbelbettreaktoren lassen sich Kieselsäuren tempern, ohne daß sich störender Metallabrieb bemerkbar macht.

Die homogene Stoffverteilung und Temperaturverteilung ermöglicht es, bei relativ niedrigen Prozeßgasdurchsätzen (0,5 - 5 $m^3$/[h·kg], dies führt zu relativ hohen Spaltproduktkonzentrationen und damit zu einer guten Hydrophobierung durch die Spaltprodukte) und z. B. Sauerstoffgehalten von 4 - 7 Vol-% zu tempern. Hier reicht der Konzentrationsbereich in dem der Sauerstoff seine bleichenden Wirkung entfaltet, nahe an der kritischen Sauerstoffkonzentration der Explosionsgrenze des Gemisches Sauerstoff/Siliconölspaltprodukte heran. Lokaler Sauerstoffüberschuß kann bei inhomogener Verteilung lokal zu einem zündfähigen Gemisch führen und damit zur Explosion führen. Mit dem Wirbelbett können die gewünschten Prozeßbedingungen sicher eingehalten werden.

Darüberhinaus können im Wirbelbett auch sehr hohe Prozeßgasdurchsätze (bis zu 50 $m^3$/[h·kg]) realisiert werden. Diese hohen Gasdurchsätze ermöglichen gefahrlose Temperungen auch bei Sauerstoffkonzentrationen über 10 % Sauerstoffgehalt.

Die Temperungen werden bevorzugt mit relativ niedrigen Prozeßgasdurchsätzen (0,5 - 5 $m^3$/[h·kg]) bei Sauerstoffgehalten von 4 - 7 Vol-% durchgeführt. Dies führt zu relativ hohen Spaltproduktkonzentrationen (was eine gute Hydrophobierung über die Gasphase garantiert), ermöglicht aber trotzdem noch den Austrag von überschüssigen Spaltprodukten. Die Spaltprodukte sind bei diesen Sauerstoffkonzentrationen zwar fast -aber doch nicht völligverfärbungsfrei und müssen daher möglichst vollständig ausgetrieben werden. Die Temperung des Kieselsäurepulvers im Wirbelschichtreaktor kann im Batch oder kontinuierlich betrieben werden. Im kontinuierlichen Betrieb soll der Reaktor so betrieben werden werden, daß der Anteil an Kieselsäureteilchen, welche der Betriebstemperatur für weniger als 15 min ausgesetzt waren, möglichst gering ist. Dies kann z.B. durch eine geeignete Anordnung von Wehren erfolgen. Die bevorzugten Temperzeiten liegen bei 0,25 - 4 h bei Temperaturen von 330 - 400 °C.

Die Reaktorgröße kann vom Labormaßstab (100 g -Bereich/Füllung), über Technikumsgröße (100 kg- Bereich/Füllung) bis zum Produktionsmaßstab (> 100 kg/Füllung) reichen.

Dieser Reaktortyp hat den Vorteil, daß er mit mittleren Teilchengrößen von 5 - 500 µm betrieben werden kann. Das bedeutet, daß sich hier nicht zwingend eine Vermahlung anschließen muß.

In allen Fällen kann die hydrophobierte Kieselsäure nach dem Konditionierschritt bzw. Tempern vermahlen werden. Eine Vermahlung aber vor dem Belegungsschritt a) ist nicht angezeigt und führt zu minderwertigen Produkten mit inhomogener Hydrophobierung.

Nach dem optionalen Vermahlen wird eine Kieselsäure mit einem $d_{[4.3]}$ von 2-25 µm, bevorzugt 2-15 µm erhalten.

Die Verwendung der erfindungsgemäß hergestellten Fällungskieselsäuren als Füllstoff in Silikonkautschukformuierungen, als Entschäumer- oder als Free-Flow-Hilfsmittel ist ebenfalls Gegenstand dieser Erfindung.

Silikonkautschukformulierungen benötigen zur vollen Ausbildung ihrer mechanischen Eigenschaften aktive Verstärkerfüllstoffe. Dabei werden üblicherweise hochdisperse Kieselsäuren verwendet. Aufgrund der leichten maschinellen Verarbeitbarkeit von LSR-Silikonkautschukformulierungen (Flüssigsilikonkautschuk) -speziell im Spritzgußverfahren - werden in zunehmenden Maße HTV-Silikonkautschukformulierungen (heißvulkanisierender Kautschuk) durch LSR-Silikonkautschukmischungen ersetzt. Dabei muß der Verstärkerfüllstoff gute mechanische Eigenschaften im Vulkanisat bewirken, ohne die rheologischen Eigenschaften der Silikonkautschukformulierungen zu beeinträchtigen. Die Silikonkautschukformulierungen müssen nach der Compoundierung fließfähig sein und sollen auch nach längeren Lagerzeiten nicht nachverstrammen.

HTV- und LSR-Silikonkautschukformulierungen werden bei Temperaturen weit über 100 °C verarbeitet. Dabei können wasserhaltige Füllstoffe zu einer störenden Dampfblasenbildung in der Silikonformulierung führen. Bei luftfeuchtigkeitshärtenden Silikonkautschukformulierungen führt ein zu hoher Wassergehalt des Füllstoffes zu einer unerwünschten Aushärtung während der Lagerung. Deshalb stellt die Wasseraufnahmecharakteristik, d.h. die adsorbierten Wassermengen bei unterschiedlichen relativen Luftfeuchten, ein Maß für die Prozeßfähigkeit des Füllstoffes dar.

Die Schwierigkeit der Dampfblasenbildung tritt besonders bei den hydrophilen Fällungskieselsäuren auf. Selbst hydrophobe Fällungskieselsäuren zeigen typischerweise nicht die niedrigen Wasseraufnahmecharakteristiken der pyrogenen Kieselsäuren.

Die mit dem erfindungsgemäßen Verfahren hergestellte hydrophobe Fällungskieselsäure zeigt jedoch eine Wasseraufnahmecharakteristik, die mit pyrogenen Kieselsäuren vergleichbar ist, weist keine Verfärbungen auf und zeigt außerdem niedrig verdickende Eigenschaften in Silikonkautschukformulierungen.

Diese Eigenschaften leiten sich aus der Art der verwendeten Basiskieselsäure und der Art der Hydrophobierung ab. Bei der Basiskieselsäure handelt es sich bevorzugt um eine Fällungskieselsäure, die eine sehr niedrige Silanolgruppendichte (als Maß der Silanolgruppendichte dient die Searszahl zusammengenommen mit der BET-Oberfläche) aufweist. Die niedrige Silanolgruppendichte der Basiskieselsäure drückt sich auch in einem niedrigen Glühverlust von 3,0 ± 0,5 bei einer BET-Oberfläche von ca. 160 $m^2$/g aus.

Für Silikonkautschukmischungen, die bei Temperaturen von fast 200 °C unter Luftzutritt verarbeitet werden,

ist es wichtig, dass keine organischen Bestandteile auf der Kieselsäure sind, welche sich bei diesen Temperaturen unter Sauerstoffeinfluß verfärben können. Nun sind siliciumorganische Verbindungen, die ausschließlich Methyl-, Phenyl, Fluorkohlenstoff oder Fluorkohlenwasserstoffe als organische Reste enthalten, auch in Anwesenweit von atmosphärischem Sauerstoff, ausgesprochen temperaturstabil. Um jedoch die stabilen Siloxanbrücken von Siloxanverbindungen effektiv zu spalten und kovalent mit der Kieselsäure zu verbinden, benötigt man Temperaturen über 300 °C. Bei diesen hohen Temperaturen führen Siloxanverbindungen, besonders bei Fällungskieselsäuren niedriger Silanolgruppendichte, üblicherweise zu Verfärbungserscheinungen auf der Kieselsäure. Das erfindungsgemäße Verfahren ermöglicht es, diese Verfärbungen zu unterdrücken. Diese Verfärbungserscheinungen werden durch Remissionsmessungen mit einem optischen Meßverfahren, das auf diffuser Reflexion beruht, gemessen. Liegen die Remissionswerte von Kieselsäure > 94% erscheint der mit Kieselsäure gefüllte Silikonkautschuk-Compound rein weiß. Da die Brechungsindices von Kieselsäure und Silikonkautschuk nahe beieinander liegen, werden selbst kleinste Verunreinigungen und Verfärbungen der Füllstoffkieselsäure im Silikonkautschuk deutlich sichtbar. Eine Remission von 93 % führt bereits zu einer deutlichen, mit dem unbewaffneten Auge sichtbaren Verfärbung im Silikonkautschuk, obwohl das nicht eingearbeitete Kieselsäurepulver dem Betrachter rein weiß erscheint.

Durch Vermischen der Kieselsäure mit Diorganopolysiloxanen und gegebenenfalls weiteren Stoffen bei Raumtemperatur oder nur wenig erhöhter Temperatur, lassen sich gegebenenfalls nach Zusatz von Vernetzungsmitteln, zu Elastomeren härtbare Massen herstellen. Die erfindungsgemäße Kieselsäure wirkt niedrig verdickend, so dass sich die Compounds in LSR-Systemen auf Spritzgußmaschinen verarbeiten lassen. Das Vermischen kann in bekannter Weise, z. B. in mechanischen Mischgeräten, erfolgen.

Vorzugsweise werden die Kieselsäuren in Mengen von 5 bis 50 Gew.-%, vorzugsweise % bis 40 Gew.-%, bezogen auf das Gesamtgewicht der zu Elastomeren härtbaren Massen, eingesetzt. Bei HTV-Organopolysiloxanelastomeren können bis zu 50 Gew.-% eingesetzt werden.

Selbstverständlich können die zu Elastomeren härtbaren Massen außer Diorganopolysiloxanen, die hydrophobierte Fällungskieselsäure, Vernetzungsmittel und Vernetzungskatalysatoren, gegebenenfalls herkömmlicherweise meist oder häufig in zu Elastomeren härtbaren Massen verwendete Füllstoffe, enthalten. Beispiele für solche Stoffe sind Füllstoffe mit einer Oberfläche unterhalb 50 $m^2/g$, wie Quarzmehl, Diatomeenerde, ferner Zikoniumsilikat und Calciumcarbonat, ferner unbehandeltes pyrogen erzeugtes Siliciumdioxid, organische Harze, wie Polyvinylchloridpulver, Organopolysiloxanharze, faserige Füllstoffe, wie Asbest, Glasfasern und organische Pigmente, lösliche Farbstoffe, Duftstoffe, Korrosionsinhibitoren, die Massen gegen den Einfluß von Wasser stabilisiernde Mittel, wie Essigsäureanhydrid, die Härtung verzögernde Mittel wie Benzotriazol und Weichmacher, sowie durch Trimethylsiloxygruppen endgeblockte Dimethylpolysiloxane.

Die angeführte Kombination physikalisch-chemischer Stoffdaten der nach dem Verfahren der Erfindung hergestellten hydrophoben Fällungskieselsäure führt zu einem ausgezeichneten Verstärkerfüllstoff. Der gegenüber den nach bekannten Verfahren hergestellten Fällungskieselsäuren deutlich herabgesetzte Gleichgewichts-Feuchtegehalt bringt Vorteile bei der Verarbeitung, z.B. bei der drucklosen Vulkanisation, bei der im Vergleich zum Einsatz der bekannten, hydratisierten Fällungskieselsäuren porenfreie Vulkanisate anfallen. Der optimal eingestellte pH-Wert und die niedrige DBP-Zahl führen zu spürbar verkürzten Weichwalzzeiten. Der niedrige Elektrolytgehalt in Kombination mit dem niedrigen Feuchtegehalt führt schließlich zu guten elektrischen Eigenschaften der Vulkanisate. In luftfeuchtigkeitshärtenden Silikonkautschuk-Dichtungsmassen zeigt die erfindungsgemäße hydrophobe Fällungskieselsäure aufgrund ihres geringen Wassergehaltes Vorteile für die Lagerfähigkeit der nicht ausgehärteten Massen.

Die folgenden Beispiele sollen die vorliegende Erfindung näher erläutern, ohne ihren Umfang einzuschränken.

**Beispiele:**

Als silikatisches Edukt werden bevorzugt Fällungskieselsäuren eingesetzt, die eine sehr niedrige Silanolgruppendichte, d.h. eine niedriges Verhältnis Alkaliverbrauch/BET-Oberfäche, eine relativ hohe CTAB-Oberfläche bei annähernd gleicher BET-Oberfläche und einen hohen Weiß- und Reinheitsgrad besitzt.

**Herstellung - Basis - Kieselsäure**

In einem Reaktionsbehälter werden 50,0 $m^3$ Wasser vorgelegt. Langsam werden 9,2 $m^3$ Wasserglaslösung und 0,9 $m^3$ $H_2SO_4$ unter Rühren zu der Vorlage gegeben, wobei in der Mischung während der Zugabe ein alkalischer pH-Wert eingehalten wird. Nach Abschluß der Zugabe von Wasserglas und $H_2SO_4$ liegt der pH-Wert der erhaltenen Suspension im alkalischen Bereich. Die Suspension wird angesäuert, abfiltriert und mit entionisiertem Wasser gewaschen. Die Trocknung der hydrophilen Basiskieselsäure kann bevorzugt durch eine Kurzzeittrocknung erfolgen Die folgenden Daten beziehen sich auf die so erhaltene, getrocknete Fällungskieselsäure.

| | |
|---|---|
| BET-Oberfläche [$m^2$/g] | 150-170 |
| CTAB-Oberfläche [$m^2$/g] | 150-170 |
| Glühverlust bez. auf die 2h/105 C°getr. Subst. (DIN 55921) [%] | 3 ± 0,5 |
| pH-Wert 5% (Methanol.-wässr. Lsg.) (DIN 53200) | 6 - 7 |
| Leitfähigkeit (in 5 %iger wässriger Dispersion) [µS] | < 150 |
| Stampfdichte [g/l] | > 250 |

Die Mischung der Basis-Kieselsäure und des Polysiloxans werden bis zu einem bestimmten Kohlenstoffgehalt durchgeführt, d. h. das Mischungsverhältnis ergibt sich aus dem rechnerischen Verhältnis zur Einstellung des geforderten Kohlenstoffgehalts.

**1. Messverfahren**

**1.1 Methanolbenetzbarkeit**

Kieselsäuren, deren Oberflächen mit nicht hydrolisierbaren, organischen Gruppen modifiziert sind, werden meist von Wasser nicht benetzt.

Diese hydrophoben Kieselsäuren lassen sich jedoch von einem Methanol/Wasser-Gemisch benetzen. Der Anteil des Methanols an diesem Gemisch - in Gewichtsprozenten ausgedrückt - ist ein Mass für die Hydrophobie der modifizierten Kieselsäure. Je höher der Methanolanteil ist, desto besser ist die Substanz hydrophobiert.

**Durchführung der Bestimmung:**

In 6 Zentrifugengläser von 15 ml Inhalt werden jeweils 200 mg hydrophobe Kieselsäure oder Silikat eingewogen und jedes der Gläser mit 8 ml eines Methanol-Wasser-Gemisches steigender Methanolkonzentration versetzt. Die Methanolkonzentration der Gemische richtet sich nach der zu erwartenden Methanolbenetzbarkeit. Die Zentrifugengläser werden dicht verschlossen und dann kräftig geschüttelt (10 auf- und Abwärtsbewegungen). Zur Abtrennung der bentzten Kieselsäure-Silikatanteile werden die Gläser dann 5 Minuten bei 2500 UpM zentriguiert. Die benetzten Anteile bilden einen Bodensatz, dessen Volumina an der Skala der Zentrifugengläser abgelesen werden. Die Sediment-Volumina werden in einer Grafik gegen die Methanol-Wasser-Gemisch-Konzentration aufgetragen. Diese einzelnen Meßpunkte ergeben eine Kurve, deren Lage und Steilheit den Hydrophobierungsgrad der untersuchten Probe charakterisiert.

Geräte:

Präzisionswaage
Zentrifuge
Zentrifugengläser, graduiert
Dispensetten

**1.2 DBP-Aufnahme**

Die DBP-Aufnahme (DBP-Zahl), die ein Mass für die Saugfähigkeit der Fällungskieselsäure ist, wird wie folgt bestimmt:

Die Bestimmung der Dibutylphthalat-Zahl erfolgt mit dem Brabender-Plastographen. Die DBP-Zahl ist ein Mass für die Saugfähigkeit bzw. das Aufnahmevermögen eines pulverförmigen Produktes an Flüssigkeit. Das Aufnahmevermögen ist abhängig vom Feuchtegehalt, der Körnung und Einwaage des untersuchten Materials.

**Geräte und Reagenzien**

Brabender-Plastograph mit Schreibvorrichtung Multi-Dosimat E 415 (50 1) der Firma Metrohm Dibutylphthalat.

**Durchführung**

12,5 g Kieselsäure werden in den Kneter des Brabender- Plastographen gegeben. Unter ständigem Mischen (Umlaufgeschwindigkeit der Kneterschaufeln 125 UpM) fliesst Dibutylphthalat mit einer Geschwindigkeit von 4 ml/ Minute in die Mischung. Das Einmischen erfordert nur geringen Kraftbedarf. Gegen Ende der Bestimmung wird das Gemisch schlecht rieselfähig. Diese Tatsache dokumentiert sich in einem Anstieg des Kraftbedarfes, der auf einer Skala angezeigt wird. Bei einem Skalenausschlag von 300 wird die DBP-Dosierung automatisch abgeschaltet.

**Auswertung**

Die Dichte von DBP beträgt 1,047 g/ml. Die DBP-Aufnahme wird auf die wasserfreie, getrocknete Substanz bezogen. Bei Verwendung von Fällungskieselsäuren mit höheren Feuchtigkeitsgehalten ist, wenn diese Fällungskieselsäuren vor der Bestimmung der DBP-Zahl nicht getrocknet werden, der Wert mittels der Korrekturtabelle zu korrigieren.

**Korrekturtabelle für Dibutylphthalataufnahme - wasserfrei —**

| % Wasser | % Wasser | | | | |
|---|---|---|---|---|---|
| % Wasser | ,0 | ,2 | ,4 | ,6 | ,8 |
| 0 | 0 | 2 | 4 | 5 | 7 |
| 1 | 9 | 10 | 12 | 13 | 15 |
| 2 | 16 | 18 | 19 | 20 | 22 |
| 3 | 23 | 24 | 26 | 27 | 28 |
| 4 | 28 | 29 | 29 | 30 | 31 |
| 5 | 31 | 32 | 32 | 33 | 33 |
| 6 | 34 | 34 | 35 | 35 | 36 |
| 7 | 36 | 37 | 38 | 38 | 39 |
| 8 | 39 | 40 | 40 | 41 | 41 |
| 9 | 42 | 43 | 43 | 44 | 44 |
| 10 | 45 | 45 | 46 | 46 | 47 |

Der Korrekturwert entsprechend dem Wassergehalt wird dem experimentell bestimmten DBP-Wert zu addiert; z. B. würde ein Wassergehalt von 5,8 % einen Zuschlag von 33 g/100g für die DBP-Aufnahme bedeuten.

**1.3 Teilchengröße**

Die Teilchengröße wird mit einem "Malvern Mastersizer" in Ethanol nach 5minütiger Ultraschallbehandlung bestimmt. Die Messung erfolgt automatisch und liefert die mittlere Teilchengröße $d_{4.3}$ aus einer Volumenverteilung.

**1.4 Bestimmung des Normfarbwertes $R_y$ nach DIN 5033**

**Anwendung**

Mit dem Spektralphotometer Datacolor 3890 wird der Normfarbwert $R_y$ bei Kieselsäuren, Silikaten und Zeolithen (Pulver-Suspension) bestimmt.

**Durchführung der Bestimmung:**

Die zu vermessende Kieselsäure wird zunächst auf einen mittleren Teilchendurchmesser von ca. 8 bis 15 um vermahlen und anschließend mit einer Pulverpresse zu einer Tablette verpreßt. Die benötigte Menge hängt von der

Feinteiligkeit des Pulvers ab. Es wird soviel Pulver eingefüllt, dass das Gewinde des Pressenverschlusses den letzten Gang erreicht.

Dazu werden die Proben unter das Meßgerät gelegt und an dem Steuerungsrechner der Menüpunkt Weißgradmessung $R_y$ und $R_{460}$ ausgewählt. Nach der Eingabe der Probenbezeichnung wird die "Space"-Taste zum Start der Messung betätigt.

Nach der Eingabe des Speichercodes werden die Meßwerte ausgedruckt.

Die Ausrechnung der Werte erfolgt automatisch nach der Formel:

$$y = \sum_{400}^{700}$$

$$y = S * (\lambda) * Y(\lambda) * R(\lambda)$$

wobei

- Y (λ) die Normspektralwertfunktion
- S (λ) relative spektrale Strahlungsverteilung der Beleuchtungsquelle und
- R (λ) den spektralen Remissionsgrad der Probe bedeuten.

### 1.5 Bestimmung der Sears-Zahl von Kieselsäuren, Silikaten und hydrophoben Kieselsäuren

1. **Anwendung:**

Durch Titration mit 0.1 N KOH im Bereich von pH 6 bis pH 9 lassen sich freie OH-Gruppen erfassen.

**2. Geräte**

2.1 Präzisionswaage auf 0.01 g genau
2.2 Memotitrator DL 70, Fa. Mettler, ausgerüstet mit 10 ml und 20 ml Bürette, 1 pH-Elektrode sowie 1 Pumpe (z. B. NOUVAG-Pumpe, Typ SP 40/6)
2.3 Drucker
2.4 Titriergefäß 250 ml Fa. Mettler
2.5 Ultra-Turrax 8000-24000 UpM
2.6 Thermostatisiertes Wasserbad
2.7 2 Dispenser 10-100 ml zur Dosierung von Methanol bzw. entionisiertem Wasser
2.8 1 Dispenser 10-50 ml zur Dosierung von entionisiertem Wasser
2.9 1 Meßzylinder 100 ml
2.10 IKA Universalmühle M 20

3. **Reagenzien**

3.1 Methanol p.A.
3.2 Natriumchlorid-Lösung, (250 g NaCl p. A. in 1000 ml entionisiertem Wasser)
3.3 0.1 N Salzsäure
3.4 0.1 N Kalilauge
3.5 entionisiertes Wasser
3.6 Pufferlösungen pH 7 und pH 9

4. **Durchführung**

4.1 Probenvorbereitung

Ca. 10 g Probe werden 60 Sekunden in der IKA-Universalmühle M 20 gemahlen.

Wichtig: Da nur sehr fein vermahlene Proben zu reproduzierbaren Ergebnissen führen, müssen diese Bedingungen genau eingehalten werden.

4.2 Durchführung der Analyse

4.2.1 2,50 g der nach Punkt 4.1 vorbereiteten Probe in ein 250 ml Titriergefäß einwiegen

4.2.2 60 ml Methanol p.A. zudosieren.

4.2.3 Nach vollständiger Benetzung der Probe 40 ml entionisiertes Wasser zugeben.

4.2.4 Mittels Ultra Turrax 30 Sekunden bei einer Drehzahl von ca. 18000 UpM dispergieren.

4.2.5 Mit 100 ml entionisiertem Wasser die am Gefäßrand und Rührer anhaftenden Probepartikel in die Suspension spülen.

4.2.6 Probe in einem thermostatisiertem Wasserbad auf 25 °C temperieren (mindestens 20 Minuten).

4.2.7 pH-Elektrode mit den Pufferlösungen pH 7 und pH 9 kalibrieren.

4.2.8 Probe wird nach der Methode S 911 im Memotitrator DL 70 titriert. Bei nicht eindeutigem Titrationsverlauf wird nachträglich eine Doppelbestimmung durchgeführt.

Als Ergebnisse werden ausgedruckt:

| | |
|---|---|
| pH | |
| $V_1$ | in ml/5 g |
| $V_2$ | in ml/5 g |

5. **Berechnung:**

$$V_1 = \frac{V*5}{E}$$

$$V_2 = \frac{V*5}{E}$$

$V_1$ = ml KOH bzw. ml HCl bis pH 6 / 5 g Substanz

$V_2$ = ml KOH-Verbrauch bis pH 9 / 5 g Substanz

E = Einwaage

**Prinzip:**

Zunächst wird der Ausgangs-pH-Wert der Suspension gemessen, danach wird je nach Ergebnis mit KOH bzw. HCl der pH-Wert auf 6 eingestellt. Danach werden 20 ml NaCl-Lösung zudosiert. Mit 0.1 N KOH wird dann die Titration bis zum pH-Wert 9 fortgesetzt.

Sears-Zahlen

$$Si-OH + NaCl \Rightarrow Si-ONa + HCl$$

$$HCl \quad + KOH \quad \Rightarrow \quad KCl \quad + H_2O$$

**1.6 Bestimmung der Stampfdichte in Anlehnung an DIN/ISO 787/11**

**Durchführung der Bestimmung:**

10 g der zu untersuchenden Probe werden auf der Präzisionswaage auf 0,01 g genau abgewogen und in den graduierten 250 ml Glaszylinder des Stampfvolumens eingefüllt. Nach 1250 Stampfungen wird das Volumen des gestampften Materials abgelesen.

**Berechnung:**

Stampfdichte: $g/l = \frac{E \bullet 1000}{I}$

E = Einwaage in g
I = Inhalt in ml

**Geräte:**

Präzisionswaage

| | |
|---|---|
| Stampfvolumeter | Fa. Engelsmann, Ludwigshafen |
| 250 ml Glaszylinder graduiert | Fa. Engelsmann, Ludwigshafen |

**Anmerkungen:**

In Sonderfällen kann das Material vor dem Einwiegen durch ein 500 µm-Sieb abgesiebt bzw. die Einwaage erhöht werden. Dieses muß im Prüfbericht angegeben werden.

**1.7 Bestimmung der CTAB-Oberfläche**

**1. Anwendung**

Die Methode beruht auf der Adsorption von CTAB (N-Cetyl-N,N,N-trimethylammoniumbromid) an der "äußeren" Oberfläche, die auch als "kautschukwirksame Oberfläche" bezeichnet wird.

Die Adsorption von CTAB erfolgt in wässriger Lösung bei pH = 9 unter Rühren und Ultraschallbehandlung. Überschüssiges, nicht adsorbiertes CTAB wird durch Rücktitration mit NDSS (Dioctylnatriumsulfosuccinat-Lösung) mit einem Titroprozessor ermittelt, wobei der Endpunkt durch das Maximum der Trübung der Lösung gegeben ist und mit einer Phototrode bestimmt wird.

Für die Berechnung wird ein Platzbedarf von 0.35 $nm^2$ pro CTAB-Molekül angenommen.

Die Bestimmung erfolgt in Anlehnung an ASTM 3765.

Bei jeder Meßreihe ist eine Standardprobe der Kieselsäure Typ VN 3 mit zu prüfen.

**2. Reaktionsgleichung: (Rücktitration)**

$$\underset{NDSS}{R_1{-}SO_3^-} + \underset{CTAB}{{}^{+}N(CH_3)_3R_2} \longrightarrow R_1SO_3N(CH_3)_3R_2$$

3. **Geräte:**

3.1 Mühle, z. B. Fabrikat IKA, Typ: M 20
3.2 Analylsenwaage
3.3 Magnetrührer
3.4 Magnetrührstäbchen
3.5 Titroprozessor, z. B. METTLER, Typ DL 55 oder DL 70, ausgerüstet mit:

pH-Elektrode, z. B. Fabrikat Mettler, Typ DG 111
Phototrode, z. B Fabrikat Mettler, Typ DP 550 und
Kolbenbürette, 20 ml Inhalt für NDSS-Lösung
Kolbenbürette, 10 ml Inhalt für KOH, 0.1 N

3.6 Titrierbecher 100 ml aus Polypropylen
3.7 Titrierglasgefäß, 150 ml Inhalt, verschließbar mit Schnappdeckel
3.8 Erlenmeyerkolben, 100 ml Inhalt, verschließbar mit Schraubverschluß oder NS-Stopfen
3.9 Ultraschallbad
3.10 Druckfiltrationsgerät
3.11 Membranfilter a. Cellulosenitrat, Porengröße 0.1 µm, 47 mm Ø, z. B. Sartorius, Typ 113 58
3.12 Pipetten, 5 ml, 100 ml

**4. Reagenzien:**

4.1 Kalilauge, 0.1 N
4.2 CTAB-Lösung, 0.0151 mol/l
5.50 g CTAB werden in einem Becherglas in ca. 800 ml warmem (ca. 30-40 °C), entmineralisiertem Wasser unter Rühren (Magnetrührer) gelöst, in einem 1 1-Meßkolben überführt, mit entmineralisiertem Wasser nach Abkühlung auf 23-25 °C bis zur Marke aufgefüllt und in eine Vorratsflasche umgefüllt.
**Achtung:**
Aufbewahrung der Lösung und Durchführung der Bestimmung müssen bei ≥ 23 °C erfolgen, da CTAB unterhalb dieser Temperatur auskristallisiert. Die Lösung sollte 10-14 Tage vor Gebrauch hergestellt werden.
4.3 NDSS-Lösung 0.00426 mol/l
1.895 g NDSS (Dioctylnatriumsulfosuccinat) werden in einem Becherglas mit ca. 800 ml entmineralisiertem Wasser versetzt und mit einem Magnetrührer gerührt, bis sich alles gelöst hat. Anschließend wird die Lösung in einem 11 Meßkolben überführt, mit entmineralisiertem Wasser bis zur Marke aufgefüllt und in eine Vorratsflasche umgefüllt. NDSS-Lösung wird leicht biologisch abgebaut. Die hergestellte Lösung ist deshalb gut zu verschließen und sollte nicht länger als 3 Monate gelagert werden.
Die Konzentration der CTAB-Lösung ist als exakt angenommen: 0.0151 mol/l.
Die Konzentration der NDSS-Lösung ist täglich durch eine "Blindtitration" zu bestimmen.

**5. Durchführung**

5.1 Blindtitration (Bestimmung der Konzentration der NDSS-Lösung).
5.2 Der Verbrauch an NDSS-Lösung für 5 ml CTAB-Lösung ist 1 x täglich vor jeder Meßreihe zu prüfen (Blindwert).
5.1.2. Genau 5 ml CTAB-Lösung in Titrierbecher pipettieren.
5.1.3. Ca. 50 ml entmineralisiertes Wasser zufügen.
5.1.4. Titration mit dem Titroprozessor bis zum Ende der Titration.
Jede Blindtitration ist als Doppelbestimmung auszuführen, bei nicht übereinstimmenden Werten sind weitere Titrationen durchzuführen, bis die Reproduzierbarkeit der Ergebnisse gegeben ist.
5.2 Adsorption
5.2.1 Die granulierten und krobkörnigen Proben werden in einer Mühle vermahlen. (Das Schlagmesser der Mühle muß bedeckt sein).

5.2.2 Genau 500 mg der vermahlenen Probe auf der Analysenwaage mit einer Genauigkeit von 0.1 mg einwiegen.

5.2.3 Abgewogene Probemenge quantitativ in ein 150 ml-Titriergefäß mit Magnetrührstäbchen überführen.

5.2.4 Genau 100 ml CTAB-Lösung zudosieren, Titriergefäß mit Deckel verschließen und 15 Minuten auf einem Magnetrührer rühren.

5.2.5 Titriergefäß an den Titroprozessor schrauben und pH-Wert der Suspension mit KOH, 0.1 mol/l, auf einen Wert von 9,0 ± 0,05 einstellen.

5.2.6 4 Minuten Behandlung der Suspension im Ultraschallbad.

5.2.7 Filtration durch ein mit Membranfilter bestücktes Druckfilter. Während der Adsorption ist unbedingt darauf zu achten, dass die Temperatur im Bereich von 23 °C und 25 °C gehalten wird.

5.3 Titration

5.3.1 5 ml Filtrat (s. Punkt 5.2.7) in 100 ml Titrierbecher pipettieren und mit entmineralisiertem Wasser auf ca. 50 ml auffüllen.

5.3.2 Titrierbecher an den Titrator schrauben.

5.3.3 Titration mit NDSS-Lösung nach vorgegebener Meßmethode bis zur maximalen Trübung.

Jede Trübung ist als Doppelbestimmung auszuführen, bei nicht übereinstimmenden Werten sind weitere Titrationen durchzuführen, bis die Reproduzierbarkeit der Ergebnisse gegeben ist.

### 6. Berechnung

$$m^2 / g = (V_1 - V_2) * \frac{100*E*2*578.435}{V_1*1000}$$

$$m^2 / g = (V_1+V_2) * \frac{115.687*E}{V_1}$$

$$m^2 / g\ (V_1+V_2) * \frac{115.687}{V^1} * 5.5$$

| | |
|---|---|
| $V_1$ = | Blindprobe (ml NDSS bei Anwendung von 5 ml CTAB) |
| $V_2$ = | Verbrauch (ml NDSS bei Anwendung von 5 ml Filtrat) |
| E = | Einwaage g CTAB/1 (5.5 g) |
| 578.435 = | Platzbedarf von 1 g CTAB in $m^2$. |

Der Meßwert ist üblicherweise korrigiert auf die wasserfreie Substanz anzugeben:

$$m2 / g = \frac{CTAB\ m^2/g*100}{100-\%H_2O}$$

Weicht der Meßwert der Standardprobe um mehr als 3 ± $m^2$/g vom Sollwert ab, so ist die gesamte Meßreihe zu wiederholen.

### 7. Anmerkung

zu 1. In der Literatur wird NDSS (Dioctylnatriumsulfosuccinat) auch Aerosol OT genannt.

An den Proben mit einem pH-Wert > 9, wie z. B. Extrusil, wird der pH-Wert gemessen, aber nicht korrigiert, weil die Säure die Oberfläche verändern kann.

Die Phototrode wird vor Beginn der Titration auf 1000 mV eingestellt, entsprechend einer Transparenz von 100 %.

zu 3. Für das Abmessen der vorgegebenen unterschiedlichen Volumina der CTAB-Lösung können auch Dispenser bzw. Kolbenhubpipetten verwendet werden, soweit diese regelmäßig kalibriert werden.

zu 4. Die unter Punkt 4.1 und 4.3 angegebenen Lösungen sind auch als gebrauchsfertige Lösungen zu beziehen. Lieferant ist z. Z. Firma Kraft, Duisburg.
Telefon: 0203-58-3025.

- Bestell-Nr. 6056.4 CTAb-Lösung 0.0151 ml/l
- Bestell-Nr. 6057.4 NDSS-Lösung 0.00423 mol

(in Glasflaschen ä 2,5 Liter)

zu 5.2.4 Hydrophobe Proben, die nach dem Rühren nicht benetzt sind, werden vor der Einstellung des pH-Wertes mit einem ULTRA-TURRAX vorsichtig dispergiert, um sie zu benetzen.

zu 5.2.5 Für die Einstellung des pH-Wertes empfiehlt sich die Verwendung eines Titrators. Die Titration wird nach der Endpunktmethode durchgeführt.

zu 5.2.7 Für die Filtration wird Stickstoff aus einer Druckgasflasche verwendet, es ist ein Vordruck von 4-6 bar einzustellen.

zu 6. Bei einer eventuell erforderlichen Wiederholung einer Meßreihe ist insbesondere darauf zu achten, dass auch das für die Einstellung des pH-Wertes verwendete pH-Meter nochmals neu kalibriert wird.

**1.8 Bestimmung der Wasserdampfaufnahme (Wasserdampfisothermen)**

Zur Bestimmung der Wasserdampfaufnahme wird die Probe bei konstanter Temperatur (30 °C) unterschiedlichen relativen Luftfeuchten ausgesetzt. Es wird gewartet, bis sich ein konstantes Gewicht eingestellt hat.
Es wird mit völlig trockener Luft (d. h. Luftfeuchtigkeit näherungsweise gleich Null) gestartet. Nach dem Erreichen des Gleichgewichts wird dieses Gewicht als Bezugspunkt gewählt, d. h. die Wasserdampfaufnahme bei einer höheren Luftfeuchte wird als Differenz zwischen dem Probengewicht in völlig trockener Luft (nach Gleichgewichtseinstellung) und dem Probengewicht in feuchter Luft (nach Gleichgewichtseinstellung) ausgedrückt. Die Luftfeuchtigkeit wird in 10 %-Schritten variiert.
Um Hystereseeffekte auszuschließen, wird sowohl die Wasseradsorption wie auch die Wasserdampfdesorption gemessen.

**Beispiel 1**

Die Trocknung und Belegung der Basis-Kieselsäure mit Silikonöl (z. B. DOW CORNING (R) 200 FLUID 50 CS, Kohlenstoffgehalt ca. 33 %, methylterminiertes Silikonöl mit einer Viskosität von 50 mPas) erfolgt über einen Spin-Flash-Trockner. Dann wird die Kieselsäure konditioniert (durch mindestens 48-stündiges Altern bei Raumtemperatur) bis sie eine Methanolbenetzbarkeit von mindestens 20 % aufweist. Die analytischen Daten der konditionierten Kieselsäure stehen in der Tabelle 1.1.

Tabelle 1.1

| Analytische Daten der konditionierten Kieselsäure | | |
|---|---|---|
| Wasser | % | 5,2 |
| pH-Wert | | 6,1 |
| Leitfähigkeit | µS | 41 |
| $N_2$-Oberfläche | $m^2$/ g | 84 |
| CTAB-Oberfläche | $m^2$/ g | 132 |
| Stampfdichte | g/ L | 317 |
| Alpine SR > 180 µm | % | 63 |
| Remission | % | 95,9 |
| C-Gehalt | % | 4,12 |
| Methanolbenetzbarkeit | % | > 20 |

Dann erfolgt die Temperung im Wirbelbett bei unterschiedlichem Sauerstoffgehalten. Die Versuchsparameter stehen in der Tabelle 1.2.

Tabelle 1.2

| Temperung im Wirbelbett bei unterschiedlichem Sauerstoffgehalt: | | | |
|---|---|---|---|
| | Versuch 1 | Versuch 2 | Versuch 3 |
| Temperzeit [min] | 60 | 60 | 60 |
| Produkttemperatur [°C] | 320-380 | 320-380 | 320-380 |
| Sauerstoffgehalt [%] | 0-0,001 | 4,0 - 6,0 | 20-22 |
| C-Gehalt vor d. Temp. | 4,12 | 4,12 | 4,12 |

Die Versuche zeigen den Zusammenhang zwischen Sauerstoffgehalt und Verfärbung. Nur bei den Versuchen 2 und 3 wird eine Remission > 94% erreicht. Diese Kieselsäuren zeigen im Silikonkautschuk -im Gegensatz zur Kieselsäure aus Versuch 1- keine sichtbare Verfärbung. Die analytischen Daten der oxidierend getemperten Fällungskieselsäure stehen in Tabelle 1.3.

Tabelle 1.3

| Analytik: | | | |
|---|---|---|---|
| | Versuch 1 | Versuch 2 | Versuch 3 |
| MeOH-Benetzbarkeit | 63 | 63 | 63 |
| C-Gehalt nach der Temp. | 3,96 | 3,47 | 3,39 |
| Remission | 92,8 | 94,5 | 94,9 |

**Patentansprüche**

**1.** Verfahren zur Herstellung hydrophober Fällungskieselsäure,
**dadurch gekennzeichnet,**
**dass**

a) eine Mischung aus einem Organopolysiloxanderviat und einer Fällungskieselsäure hergestellt,
b) eine Konditionierung bei 10 bis 150 °C für eine Zeit von 0,5 bis 72 h vorgenommen und
c) eine oxidative Temperung unter fluiden Bedingungen bei über 300 °C mit einem oxidierenden Gas durchgeführt wird.

**2.** Verfahren nach Anspruch 1,
**dadurch gekennzeichnet,**
**dass** Verfahrensschritt a) durch Zugabe des Organopolysiloxanderivats auf eine Fällungskieselsäure mit einem Wasseranteil von 1,0 bis 80 % erfolgt.

**3.** Verfahren nach Anspruch 1,
**dadurch gekennzeichnet,**
**dass** Verfahrensschritt a) durch Zugabe des Organopolysiloxanderviats auf eine Fällungskieselsäure mit einem Wassergehalt von 70 bis 99 % bei anschließender Trennung des Feststoffs vom Wasser erfolgt.

**4.** Verfahren nach Anspruch 1,
**dadurch gekennzeichnet,**
**dass** Verfahrensschritt a) durch gleichzeitiges Zuführen einer Fällungskieselsäure oder wasserhaltiger Fällungskieselsäure und des Organopolysiloxanderviats in einen Spin-Flash-Trockner erfolgt.

**5.** Verfahren nach Anspruch 1,
**dadurch gekennzeichnet,**
**dass** Verfahrensschritt a) durch Mischen einer Fällungskieselsäure mit einer bereits konditionierten Fällungskieselsäure, erhalten nach dem Verfahrensschritt a) und b), durchgeführt wird.

**6.** Verfahren nach einem der Ansprüche 1 bis 5,
**dadurch gekennzeichnet,**
**dass** Verfahrensschritt b) durch eine 0,5- bis 2-stündige Wärmebehandlung bei 100 bis 150 °C erfolgt.

**7.** Verfahren nach einem der Ansprüche 1 bis 6,
**dadurch gekennzeichnet,**
**dass** Verfahrensschritt b) durch eine mindestens 48-stündige Lagerung bei Raumtemperatur erfolgt.

**8.** Verfahren nach einem der Ansprüche 1 bis 7,
**dadurch gekennzeichnet,**
**dass** das oxidierende Gas $Cl_2$, $NO_x$, $O_3$, $O_2$, $Br_2$ und/oder $F_2$ enthält.

**9.** Verfahren nach einem der Ansprüche 1 bis 8,
**dadurch gekennzeichnet,**
**dass** das oxidierende Gas zusätzlich ein Inertgas enthält..

**10.** Verfahren nach Anspruch 9,
**dadurch gekennzeichnet,**
**dass** der Gehalt an oxidierendem Gas im Inertgas mindestens 1 Vol-% beträgt.

**11.** Verfahren nach einem der Ansprüche 1 bis 10,
**dadurch gekennzeichnet,**
**dass** das oxidierende Gas Luft, oder ein Gemisch von Luft mit inerten Gasen ist.

**12.** Verfahren nach einem der Ansprüche 1 bis 11,
**dadurch gekennzeichnet,**
**dass** das oxidierende Gas zusätzlich bis zu 80 Vol-% Wasser enthält.

**13.** Verfahren nach einem der Ansprüche 1 bis 12,
**dadurch gekennzeichnet,**
**dass** einer der Verfahrensschritte a), b) oder c) mehrmals hintereinander durchgeführt wird.

**14.** Verfahren nach einem der Ansprüche 1 bis 12,
**dadurch gekennzeichnet,**
**dass** die Verfahrensschritte a) und b) mehrmals hintereinander durchgeführt werden.

**15.** Verfahren nach einem der Ansprüche 1 bis 12,
**dadurch gekennzeichnet,**
**dass** die Verfahrensschritte a) b) und c) mehrmals hintereinander durchgeführt werden.

**16.** Verfahren nach einem der Ansprüche 1 bis 15,
**dadurch gekennzeichnet,**
**dass** die fluiden Bedingungen in einem Schwebebett, Fließbett, Wirbelbett, Fluidatbett und/oder Sprudelbett eingestellt werden.

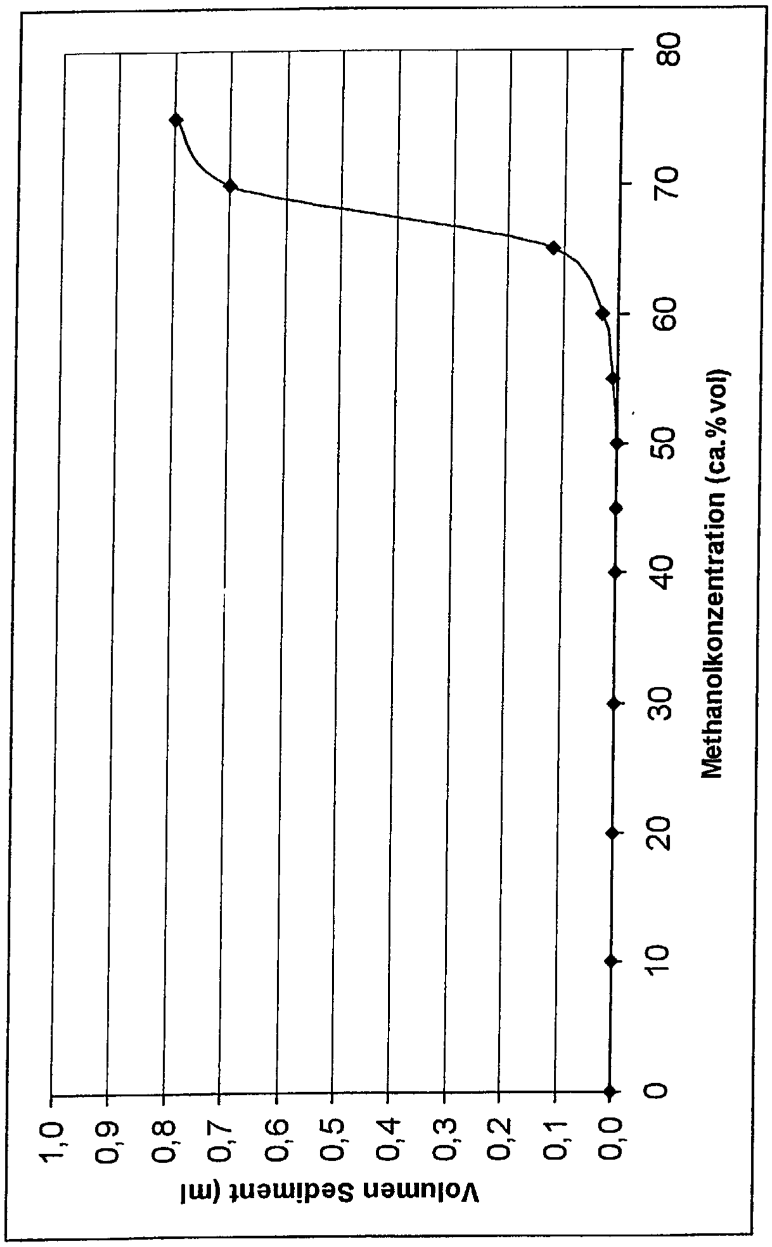
1,0
0,9
0,8
0,7
0,6
0,5
0,4
0,3
0,2
0,1
0,0
Volumen Sediment (ml
0
10
20
30
40
50
60
70
80
Methanolkonzentration (ca.% vol)

Fig. 1

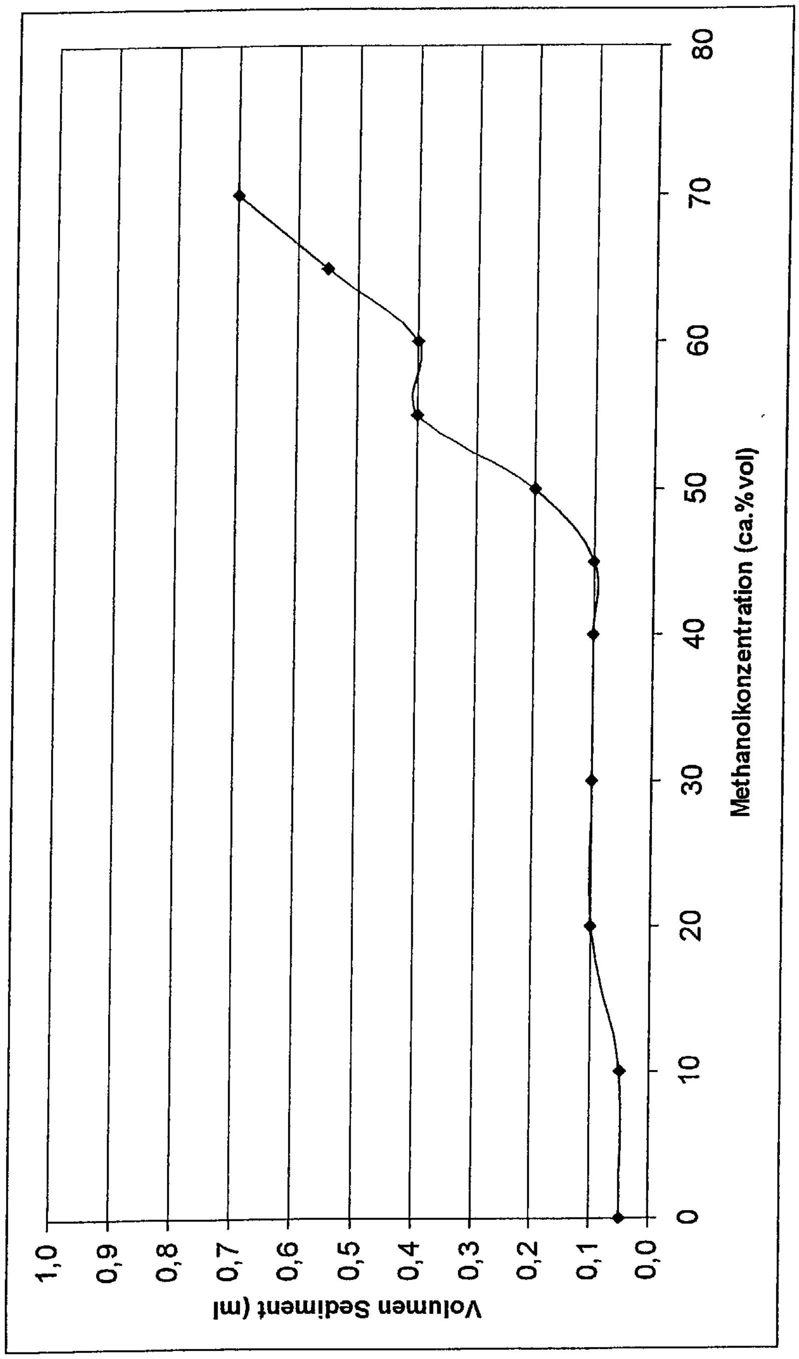
Volumen Sediment (ml
1,0
0,9
0,8
0,7
0,6
0,5
0,4
0,3
0,2
0,1
0,0
0
10
20
30
40
50
60
70
80
Methanolkonzentration (ca.% vol)

Fig. 2

Europäisches Patentamt

# EUROPÄISCHER RECHERCHENBERICHT

Nummer der Anmeldung
EP 02 01 2875

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | US 4 273 589 A (NAUROTH PETER ET AL) 16. Juni 1981 (1981-06-16) * Spalte 2, Zeile 18-27 * * Beispiel 2 * --- | 1-16 | C09C1/30 C01B33/193 |
| X | US 5 959 005 A (HENNIG THOMAS ET AL) 28. September 1999 (1999-09-28) * Spalte 1, Zeile 14-39 * --- | 1-16 | |
| X | EP 0 808 880 A (DEGUSSA) 26. November 1997 (1997-11-26) * Seite 2, Zeile 19-26 * --- | 1-16 | |
| X | US 4 849 022 A (KOBAYASHI HIDEKI ET AL) 18. Juli 1989 (1989-07-18) * Spalte 3, Zeile 50-63 * ----- | 1-16 | |

RECHERCHIERTE SACHGEBIETE (Int.Cl.7)
C09C
C01B

Der vorliegende Recherchenbericht wurde für alle Patentansprüche erstellt

| Recherchenort | Abschlußdatum der Recherche | Prüfer |
|---|---|---|
| MÜNCHEN | 28. November 2002 | Besana, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

**ANHANG ZUM EUROPÄISCHEN RECHERCHENBERICHT ÜBER DIE EUROPÄISCHE PATENTANMELDUNG NR.** EP 02 01 2875

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

28-11-2002

| Im Recherchenbericht angeführtes Patentdokument | | Datum der Veröffentlichung | Mitglied(er) der Patentfamilie | | Datum der Veröffentlichung |
|---|---|---|---|---|---|
| US 4273589 | A | 16-06-1981 | DE | 2628975 A1 | 29-12-1977 |
| | | | BE | 856177 A1 | 27-12-1977 |
| | | | CA | 1109640 A1 | 29-09-1981 |
| | | | ES | 460113 A1 | 16-08-1978 |
| | | | ES | 467824 A1 | 16-10-1978 |
| | | | FR | 2356596 A1 | 27-01-1978 |
| | | | GB | 1546325 A | 23-05-1979 |
| | | | JP | 1605594 C | 31-05-1991 |
| | | | JP | 56164008 A | 16-12-1981 |
| | | | JP | 63002887 B | 21-01-1988 |
| | | | JP | 53002398 A | 11-01-1978 |
| | | | NL | 7705498 A ,B, | 30-12-1977 |
| | | | SE | 431762 B | 27-02-1984 |
| | | | SE | 7707419 A | 29-12-1977 |
| | | | US | 4308074 A | 29-12-1981 |
| US 5959005 | A | 28-09-1999 | DE | 19616781 A1 | 06-11-1997 |
| | | | CA | 2203726 A1 | 26-10-1997 |
| | | | CN | 1167729 A ,B | 17-12-1997 |
| | | | EP | 0808880 A2 | 26-11-1997 |
| | | | JP | 10087317 A | 07-04-1998 |
| | | | KR | 260325 B1 | 01-07-2000 |
| EP 0808880 | A | 26-11-1997 | DE | 19616781 A1 | 06-11-1997 |
| | | | CA | 2203726 A1 | 26-10-1997 |
| | | | CN | 1167729 A ,B | 17-12-1997 |
| | | | EP | 0808880 A2 | 26-11-1997 |
| | | | JP | 10087317 A | 07-04-1998 |
| | | | KR | 260325 B1 | 01-07-2000 |
| | | | US | 5959005 A | 28-09-1999 |
| US 4849022 | A | 18-07-1989 | JP | 63006062 A | 12-01-1988 |
| | | | AU | 597989 B2 | 14-06-1990 |
| | | | AU | 7466887 A | 07-01-1988 |
| | | | BR | 8703185 A | 08-03-1988 |
| | | | CA | 1307094 A1 | 08-09-1992 |
| | | | DE | 3778589 D1 | 04-06-1992 |
| | | | EP | 0251176 A2 | 07-01-1988 |
| | | | ES | 2004310 A6 | 16-12-1988 |

EPO FORM P0461

Für nähere Einzelheiten zu diesem Anhang : siehe Amtsblatt des Europäischen Patentamts, Nr.12/82